# EUROPÄISCHE PATENTSCHRIFT

(11) **EP 3 623 686 B1**
(45) Veröffentlichungstag und Bekanntmachung des Hinweises auf die Patenterteilung: **02.11.2022**
(21) Anmeldenummer: 19196082.2
(22) Anmeldetag: 09.09.2019
(51) Int. Cl.: F16P 1/02, B23Q 11/08

(54) **FALTENABDECKUNG FÜR EINEN DACHBEREICH EINER MASCHINE**
FOLDING COVER FOR A ROOF AREA OF A MACHINE
RECOUVREMENT PLIANT POUR UNE ZONE DE TOIT D'UNE MACHINE

(30) Priorität: 13.09.2018 DE 202018105244 U
(43) Veröffentlichungstag der Anmeldung: 18.03.2020
(73) Patentinhaber: Möller Werke GmbH, 33649 Bielefeld (DE)
(72) Erfinder: Vogt, Karsten, 33649 Bielefeld (DE)
(74) Vertreter: Schober, Mirko

(56) Entgegenhaltungen:
- DE-U1- 9 016 519

## Beschreibung

Die Erfindung betrifft eine Faltenabdeckung für einen Dachbereich einer Maschine gemäß dem Oberbegriff von Anspruch 1.

Insbesondere im produzierenden Bereich eingesetzte Faltenabdeckungen dienen beispielsweise der optischen und/oder aus Sicherheitsgründen erforderlichen Abschirmung beweglicher Maschinen oder deren Teilen gegenüber ihrer Umgebung. Deren Aufbau kann eine mehrfach gefaltete Materialbahn oder die gelenkige Aneinanderreihung entsprechender Materialstreifen beinhalten. Durch wechselseitiges Umlegen der Materialbahn oder der Materialstreifen entlang von Faltenkanten werden entsprechende Innen- und Außenfalten ausgebildet, welche eine Veränderung ihrer quer zu den Falten verlaufenden Auszugslänge ermöglichen. Hierbei werden die beiden Faltenabschnitte jeder Falte - um deren sie miteinander verbindende Faltenkante herum - gegeneinander verschwenkt, so dass der zwischen ihnen eingeschlossene Winkel beispielsweise von 0° bis 180° variieren kann. Aus der DE 90 16 519 U1 oder der DE 10 2013 106 134 B4 sind Gattungsgemäße Faltenabdeckungen bekannt.

Je nach Einsatzgebiet kann es sich bei dem der Abdeckfläche einer Faltenabdeckung zugrundeliegenden Material um ein beschichtetes oder unbeschichtetes Material handeln. Dabei kann die Faltenabdeckung beispielsweise ein- oder mehrlagig ausgestaltet sein, wobei die einzelnen Lagen voneinander unterschiedliches Material aufweisen können. Bei anderen Ausgestaltungen ist das Deckenmaterial um weitere Elemente ergänzt, bei denen es sich beispielsweise um Trag- sowie Führungsteile, Gleiter und vor mechanischer Einwirkung schützende Elemente wie etwa Abdeckbleche in Form von Blechlamellen handeln kann.

Um die Grundform der Abdeckfläche einer Faltenabdeckung zu erhalten, wird diese in der Regel zunächst mechanisch aus einer geeigneten Materialbahn herausgetrennt. Anschließend erfolgt die Übertragung des benötigten Faltmusters, indem der Zuschnitt - entweder direkt oder unter Einbringung von Materialschwächungen in das Faltenbalgmaterial - entlang der vorgesehenen Faltenkanten geknickt wird. Materialschwächungen können beispielsweise mittels Fräsen, mechanischem Lochen oder durch Messerzuschnitt erfolgen. Alternativ hierzu können entsprechende Materialstreifen von einer Materialbahn abgetrennt oder aus dieser herausgelöst werden, die dann zur Ausbildung von Faltkanten entlang ihrer Längskanten gelenkig miteinander verbunden werden.

Insbesondere im Überkopfbereich einer Maschine eingesetzte Faltenabdeckungen bedürfen einer geeigneten Abstützung, um in ihrer im Wesentlichen horizontalen Ausrichtung gehalten zu werden. Hierzu sind in der Regel parallel zueinander angeordnete Tragprofile vorgesehen, die sich jeweils endseitig an einander gegenüberliegende Führungsleisten verschieblich abstützen. Die dann auf oder unter den Tragprofilen angeordnete Abdeckfläche der Faltenabdeckung weist zumindest im (teilweise) zusammengeschobenen Zustand herabhängende Falten auf. Dabei wird also eine mit ihrer Spitze nach unten weisende Innenfalte gehalten, indem die in entgegengesetzte Richtung weisenden Spitzen der sie umgebenden Außenfalten mit den Tragprofilen verbunden sind. Dies gilt ebenso für dabei nicht spitz, sondern demgegenüber schlaufenartig herabhängende Innenfalten bei einer Abdeckfläche aus einer durchgehenden Materialbahn. Je nach gewünschtem Maximalabstand zwischen den Tragprofilen ergeben sich im zusammengeschobenen Zustand mitunter weit herabhängende Innenfalten, die insbesondere bei höherer Verfahrgeschwindigkeit der Faltenabdeckung ein nachteiliges Schwingverhalten zeigen. Wegen des zumeist hohen Gewichts der Abdeckfläche weisen die Tragprofile eine ebenfalls zumeist schwere Ausgestaltung auf. Bei einer üblichen Spannweite der Tragprofile von fünf Metern und mehr sowie einer typischen Auszugslänge von beispielsweise 8 bis 20 Metern ist der genannte Effekt aufgrund des dann hohen Gesamtgewichts besonders ausgeprägt.

Andere bekannte Ausführungen der Faltenabdeckung haben eine aus gelenkig miteinander verbundenen Materialstreifen gefertigte Abdeckfläche. Hierbei wird beispielsweise jede zweite Falte kederartig mit einem Tragprofil verbunden. Im Ergebnis ergeben sich auch hierbei entsprechend stark herabhängende Innenfalten mit entsprechendem Schwingverhalten.

Insgesamt stellt zudem die präzise Führung der möglichst parallel zueinander zu verschiebenden Tragprofile eine Herausforderung dar, die nicht selten mit einem Verkanten oder gar deren Herausspringen aus einer der beiden Führungsleisten einhergeht. Um einen möglichst gleichmäßigen Lauf der Tragprofile zu erhalten, können diese beispielsweise mit einem Scherensystem gekoppelt werden.

Der vorliegenden Erfindung liegt die Aufgabe zugrunde, eine gattungsgemäße Faltenabdeckung dahingehend weiterzuentwickeln, dass diese trotz wirtschaftlicherer Herstellungsweise verbesserte Laufeigenschaften besitzt und gleichzeitig höhere Verfahrgeschwindigkeiten zulässt.

Diese Aufgabe wird durch eine Faltenabdeckung mit den Merkmalen des Anspruchs 1 gelöst. Vorteilhafte Ausführungsformen finden sich in den Unteransprüchen.

Die für einen Dachbereich einer Maschine vorgesehene Faltenabdeckung umfasst eine Abdeckfläche, welche zur abwechselnden Ausbildung von Innenfalten sowie Außenfalten vorgesehene Faltkanten aufweist, zwischen denen sich jeweils ein Faltenabschnitt erstreckt. Die Abdeckfläche ist mit an sich gegenüberliegenden Führungsleisten verschieblich abgestützten Tragprofilen verbunden. Über die Veränderung eines jeweils zwischen zwei Faltenabschnitten eingeschlossenen Winkels ist die Abdeckfläche in ihrer Auszugslänge veränderbar. Naturgemäß ist der Abstand zwischen den verschieblichen Tragprofilen dabei ebenfalls veränderbar, so dass diese bei einem Zurückschieben der Abdeckfläche einander angenähert werden, während sie sich mit zunehmendem Auszug der Abdeckfläche voneinander entfernen.

Erfindungsgemäß wird nun vorgeschlagen, die Abdeckfläche über wenigstens einige ihrer Faltenabschnitte mit den Tragprofilen zu verbinden. Der Verbindungsbereich zwischen einem Tragprofil und Faltenabschnitt der Abdeckfläche ist dabei so gewählt, dass dieser jeweils zwischen zwei einen Faltenabschnitt begrenzenden Faltkanten gelegen ist. Somit ist das mit einem Faltenabschnitt verbundene Tragprofil dabei so weit von den diesen Faltenabschnitt begrenzenden Faltkanten entfernt, dass der Verbindungsbereich zwischen Tragprofil und Faltenabschnitt keinerlei Überschneidung und/oder Berührung mit den Faltkanten aufweist.

Dies hat den Vorteil, dass der nunmehr nicht mehr in, sondern zwischen den Faltkanten eines Faltenabschnitts gelegene Verbindungsbereich zum Tragprofil eine Reduzierung der ansonsten nahezu vollständig herabhängenden Länge einer Innenfalte ermöglicht. Diese Reduzierung ergibt sich daraus, dass ein Anteil zweier eine Falte bildender Faltenabschnitte dabei über eine Ebene der Tragprofile hinausragt, während nur noch der verbleibende Anteil unterhalb dieser Ebene liegt. Die damit verkleinerten herabhängenden Anteile der einzelnen Falten der Abdeckfläche weisen ein entsprechend verringertes Schwingverhalten auf, was insgesamt höhere Verfahrgeschwindigkeiten für die Faltenabdeckung zulässt. Die demgegenüber verbleibenden und im Wesentlichen über der Ebene der Tragprofile gelegenen Anteile der Falten wirken dabei wie ein stabilisierendes Gegengewicht, was mit zunehmender Festigkeit beziehungsweise Steifigkeit des für die Abdeckfläche verwendeten Materials das Nachschwingen gänzlich unterbinden kann.

Insgesamt werden die Laufeigenschaften der Faltenabdeckung verbessert, da die erfindungsgemäße Anordnung wenigstens einiger ihrer Faltenabschnitte an den Tragprofilen zu einer vorteilhaften Abstützung der Tragprofile untereinander beiträgt. Gegenüber einem schlaffen schlaufenartigen Herabhängen besitzt die erfindungsgemäße Ausgestaltung der Falten die Eigenschaft einer quasi elastischen Scheibe, die eine stets parallele Ausrichtung der verschieblichen Tragprofile bewirkt. Hierdurch sind keine zusätzlichen teuren sowie schweren Systeme wie beispielsweise Scherensysteme mehr erforderlich, da die Selbstausrichtung der Tragprofile über ihre Verbindung zu den Falten bereits deren verbessertes Laufverhalten ohne Verkanten ermöglicht. Im Ergebnis ist die erfindungsgemäße Faltenabdeckung daher auch überaus wartungsfreundlich.

Gemäß einer besonders bevorzugten Ausgestaltung der erfindungsgemäßen Faltenabdeckung kann der Verbindungsbereich zwischen einem Tragprofil und einem Faltenabschnitt, im mittleren Drittel des Faltenabschnitts, insbesondere genau mittig, zwischen den ihn begrenzenden Faltkanten gelegen sein. Auf diese Weise sind die oberhalb und unterhalb eines Tragprofils gelegenen Anteile der Falten insofern gleich, was eine weitergehende vorteilhafte Reduzierung ihrer unterhalb der Ebene der Tragprofile gelegenen Bereiche ermöglicht. Durch das dabei zumindest nahezu ausgeglichene Verhältnis der Anteile der Falten bilden die Tragprofile eine feste Umlenkachse, um die herum die Faltenabschnitte entsprechend verschwenkbar sind.

Vorteilhafterweise kann die Abdeckfläche der erfindungsgemäßen Faltenabdeckung aus einem zumindest begrenzt biegesteifen Material gebildet sein. Dieses Material ist dabei bevorzugt so gewählt, dass wenigstens eine Innenfalte und/oder eine Außenfalte der Abdeckfläche zwischen zwei mit den Faltenabschnitten benachbarter Innenfalten und/oder Außenfalten verbundenen Tragprofilen ungestützt tragfähig ist. Aufgrund der genannten Anforderung ist ersichtlich, dass das Material hierzu - entgegen einem eher formlosen Durchhängen - eine ausreichende Eigensteifigkeit aufweisen muss. Daher sollte das Material hierzu eine ausreichende Formstabilität dahingehend aufweisen, dass dieses, entlang seiner Längskante biegesteif gehalten, auf die Länge eines Faltenabschnitts eine nur geringe Durchbiegung an seiner ungestützt gegenüberliegenden freien Längskante aufweist. Hierzu eignet sich beispielsweise ein Material aus einem entsprechend steifen Gewebe. Alternativ oder ergänzend hierzu kann das Material selbstverständlich entsprechende Aussteifungen besitzen, um seine ansonsten nicht ausreichende Eigensteifigkeit zu erhöhen.

Grundsätzlich sieht die Erfindung vor, dass die Abdeckfläche der Faltenabdeckung aus einer durchgehenden Materialbahn gebildet sein kann. Gemäß einer bevorzugten alternativen Ausgestaltung kann die Abdeckfläche aus an den Faltkanten miteinander verbundenen Materialstreifen gebildet sein oder zumindest solche aufweisen. Insbesondere durch eine beispielsweise rastende Verbindung derartiger Materialstreifen entlang der Faltkanten ist es möglich, die Abmessungen der Faltenabdeckung vor Ort anzupassen und bei Bedarf zu ändern. In Kombination mit einer ebenfalls leicht lösbaren und wiederherstellbaren Verbindung zu den Tragprofilen kann so eine Art Baukastensystem vorliegen, welches eine einfache Anpassung an die jeweiligen Gegebenheiten und Anforderungen ermöglicht.

Nach einer vorteilhaften Weiterbildung der Erfindung kann jede der beiden Führungsleisten wenigstens zwei übereinanderliegende Schienen besitzen. Die Schienen können dabei so ausgebildet sein, dass die aufeinanderfolgenden Tragprofile abwechselnd in und/oder an den Schienen verschieblich abgestützt sind. Abwechselnd meint hierbei, dass die verschiebliche Abstützung beispielsweise jedes zweiten Tragprofils in einer und/oder an einer ersten dieser Schienen erfolgt, während die übrigen Tragprofile in und/oder an einer zweiten dieser Schienen verschieblich abgestützt sind. Auf diese Weise liegen die im zusammengeschobenen Zustand der Faltenabdeckung unmittelbar nebeneinanderliegenden Tragprofile in zwei voneinander unterschiedlichen Ebenen. Dazu kann insbesondere vorgesehen sein, dass die bezogen auf die Faltenabdeckung benachbarten Tragprofile relativ zueinander höhenversetzt an der Faltenabdeckung angebracht sind. Aufgrund der Möglichkeit zur zumindest teilweisen Anordnung benachbarter Tragprofile übereinander, ist deren gegeneinander Fahren ausgeschlossen, was ein wesentlich kompakteres Zusammenschieben der Faltenabdeckung ermöglicht. Zudem treffen die Tragprofile nicht nachteilig aufeinander, da sich der jeweilige Kontakt eines Tragprofils auf einen Bereich einer Falte bezieht, was höhere Verfahrgeschwindigkeit der Faltenabdeckung erlaubt.

Nach einer Weiterentwicklung der Erfindung ist vorgesehen, dass wenigstens eines der Tragprofile zwischen zwei Schienen einer Führungsleiste verschieblich geführt sein kann. In dieser Ausgestaltung ist denkbar, dass in Bezug auf eine höhenversetzte Anordnung aufeinanderfolgender Tragprofile eines zwischen zwei Schienen geführt ist, während das darauffolgende Tragprofil in oder an einer dieser Schienen geführt ist.

Selbstverständlich können in oder an der Faltenabdeckung geeignete Feder- und/oder Dämpfungselemente verbaut sein, um die dynamische Bewegung der Faltenabdeckung entsprechend abzufedern und/oder abzubremsen. Bevorzugt kann ein solches Feder- und/oder Dämpfungselement im Bereich einer Falte angeordnet sein. Das Feder- und/oder Dämpfungselement kann beispielsweise aus einem Metall oder Kunststoff gebildet sein oder zumindest einen dieser Werkstoffe aufweisen.

Angesichts einer möglichst leichten und im Hinblick auf dynamische Bewegungen möglichst geringen Masse wird es als vorteilhaft angesehen, wenn die Tragprofile der Faltenabdeckung aus einem Faser-Verbundwerkstoff gebildet sind oder zumindest einen solchen aufweisen. Bei dem Faser-Verbundwerkstoff kann es sich um einen faserverstärkten Kunststoff handeln, wie beispielsweise einen mit Glasfasern verstärkten Kunststoff (GFK) oder einen mit Kohlenstofffasern verstärkten Kunststoff (CFK). Hierbei sind die jeweiligen Fasern in üblicher Weise in eine Matrix aus Kunststoff eingebettet.

In vorteilhafter Weise können die Tragprofile aus einem Hohlkörper gebildet sein oder einen solchen aufweisen. Hierdurch wird ein vorteilhaftes Verhältnis zwischen deren Festigkeit und Gewicht erreicht. Die Querschnittsausgestaltung der Tragprofile kann beispielsweise rund oder rechteckig sein, wobei auch drei- oder mehreckige Formen denkbar sind.

Die Erfindung sieht vor, dass an wenigstens einem der Faltenabschnitte einer Innenfalte und/oder einer Außenfalte ein Abdeckblech angeordnet sein kann. Ein derartiges Abdeckblech erhöht beispielsweise die Durchschlagsfestigkeit der Faltenabdeckung, um erhöhte Anforderungen an die maximal aufzunehmende Durchschlagskraft erfüllen zu können. Bevorzugt können derartige Abdeckbleche an allen Faltenabschnitten der Abdeckfläche angeordnet sein. Dabei ist ein solches Abdeckblech nicht auf dessen metallische Ausgestaltung beschränkt, so dass selbstverständlich auch andere Materialien wie beispielsweise ein Kunststoff denkbar sind.

Um eine möglichst dauerhafte und mit nur geringem Widerstand einhergehende verschiebliche Führung in und/oder an den Führungsleisten zu erhalten, können die Tragprofile an deren Enden angeordnete Rollkörper und/oder Gleitkörper besitzen. Die Rollkörper und/oder Gleitkörper ermöglichen eine entsprechend rollende und/oder gleitende Abstützung der Tragprofile, so dass diese möglichst frei von einem Verkanten entlang der Führungsleisten verschieblich sind. Dabei kann die rollende und/oder gleitende Eigenschaft so eingestellt sein, dass sich eine vorteilhafte Dämpfungswirkung in Bezug auf die Verschiebung der Tragprofile ergibt.

Gemäß einer erfindungsgemäßen Ausführungsform können die Rollkörper und/oder Gleitkörper zumindest an die Führungsleisten und/oder deren Schienen formangepasst sein. So kann insbesondere der mit einer Führungsleiste oder deren wenigstens einen Schiene in Kontakt stehende Teil der Rollkörper und/oder Gleitkörper an diese formangepasst sein, um eine seitliche, also in Längsrichtung eines Tragprofils erfolgende Stabilisierung zu erreichen. Insbesondere bei der Anordnung von zwei übereinanderliegenden Schienen einer Führungsleiste und der zwischen diesen erfolgenden verschieblichen Führung der Rollkörper und/oder Gleitkörper kann deren formangepasste Ausgestaltung an die Schienen eine hohe Sicherheit gegenüber einem seitlichen Herausziehen bewirken.

In einer Weiterführung der formangepassten Ausgestaltung der Rollkörper und/oder Gleitkörper wird es als vorteilhaft angesehen, wenn in deren Bereich ein Bürstenelement angeordnet ist. Das Bürstenelement ist dazu ausgebildet, die Führungsleiste und/oder deren Schiene/n zumindest teilweise abzudichten. Dies meint insbesondere den effektiven Schutz gegen Verschmutzung, die im Hinblick auf die beispielsweise zwischen den Schienen angeordneten Roll- und/oder Gleitkörper zu deren Schwergängigkeit bis hin zum Blockieren und einem vorzeitigen Verschleiß führen kann. Je nach Ausgestaltung kann dieses auch zu einer erhöhten Sicherheit gegenüber einem Verkanten und/oder Herausrutschen der Tragprofile in Bezug auf die Führungsleisten dienen.

Die erfindungsgemäße Faltenabdeckung kann wenigstens eine Bürstenleiste besitzen. Diese kann beispielsweise zu einer möglichst lückenlosen Abdichtung der Faltenabdeckung gegenüber einer Einhausung einer darin angeordneten Maschine beitragen. Besonders bevorzugt kann eine solche Bürstenleiste im Bereich einer Führungsleiste angeordnet sein, so dass sich ein vorteilhafter Abschluss zwischen der zur Einhausung der Maschine weisenden Bürstenleiste und der Abdeckfläche ergibt.

Die eigentliche Verbindung zwischen einem Tragprofil und dem zugehörigen Faltenabschnitt kann bevorzugt so gestaltet sein, dass der Verbindungsbereich zwischen dem Tragprofil und dem Faltenabschnitt wenigstens eine an dem Faltenabschnitt angeordnete und/oder durch diesen gebildete Lasche aufweist. Unter einer solchen Lasche wird im Sinne der Erfindung eine schlaufen- oder taschenförmige Ausgestaltung verstanden, so dass das zugehörige Tragprofil zumindest abschnittsweise durch die Lasche hindurch geführt oder in die Lasche eingeführt ist. Im Ergebnis wird so eine im Wesentlichen formschlüssige oder zumindest teilweise umgreifende Verbindung geschaffen, die ein schnelles Verbinden sowie Lösen ermöglicht.

Eine solche Lasche kann nicht nur aus dem Material der Abdeckfläche selbst gebildet sein, sondern auch nachträglich an dieser befestigt werden. So kann die Lasche beispielsweise durch Nähen und/oder Ultraverschweißen und/oder Kleben mit dem zugehörigen Faltenabschnitt der Abdeckfläche verbunden sein. Die Verbindungsarten dieser nicht abschließenden Aufzählung ermöglichen allesamt eine dauerhafte Verbindung der Lasche mit dem zugehörigen Faltenabschnitt.

Sofern die Abdeckfläche in bevorzugter Weise eine durchgehende Materialbahn aufweist, können die erforderlichen Faltkanten gebildet sein, indem die Abdeckfläche jeweils im Bereich der Faltkanten zumindest partiell geschlitzt ist. Die hierdurch gezielt eingebrachte Schwächung des Materials erlaubt eine einfache Ausbildung der zur Faltenbildung notwendigen Knicke in der Abdeckfläche, die sich entlang dieser Schwächungen einstellen beziehungsweise einbringbar sind.

Besonders bevorzugt kann durch eine geeignete Auswahl des Materials für die Abdeckfläche diese zumindest bereichsweise lichtdurchlässig ausgebildet sein. Dies lässt ein Eindringen von Umgebungslicht in die Einhausung einer Maschine zu, so dass auf eine zusätzliche Beleuchtung verzichtet werden kann oder diese nur eine geringe Lichtleistung bedarf.

Die nunmehr vorgestellte erfindungsgemäße Faltenabdeckung weist überaus vorteilhafte Eigenschaften gegenüber bisher bekannten Ausführungsformen auf. Aufgrund der erfindungsgemäßen Verbindung zwischen Abdeckfläche und Tragprofilen in Kombination mit der sich daraus ergebenden Anordnung der Falten wird ein sehr gleichmäßiges Laufverhalten mit einer sehr guten Eigendämpfung erzielt. Die Reduzierung des herabhängenden Teils der Falten in Kombination mit einer in ihrem Material steiferen Abdeckfläche führt selbst bei abrupten Lastwechseln zu einem nur geringen Schwingen beziehungsweise Überschwingen. Insgesamt eignet sich die erfindungsgemäße Faltenabdeckung daher hervorragend auch für hochdynamische Anwendungen. Durch den insgesamt einfachen Aufbau lässt sich die erfindungsgemäße Faltenabdeckung zudem kostengünstig herstellen, wobei deren leichter Aufbau eine einfache Installation und/oder Anpassung an örtliche Gegebenheiten erlaubt.

Die Erfindung wird anhand der in den Figuren 1 bis 4 dargestellten Ausführungsbeispiele nachfolgen näher erläutert.
- Figur 1 -: zeigt eine erfindungsgemäße Faltenabdeckung in einer perspektivischen Darstellungsweise,
- Figur 2 -: zeigt eine im Wesentlichen seitliche perspektivische Darstellung eines Abschnitts der Faltenabdeckung aus Fig. 1,
- Figur 3 -: zeigt einen Detailausschnitt einer seitlichen Führung der Faltenabdeckung aus den Fig. 1 und 2 in einer ersten Variante,
- Figur 4 -: zeigt einen weiteren Detailausschnitt der seitlichen Führung der Faltenabdeckung aus den Fig. 1 und 2 in einer zweiten Variante.

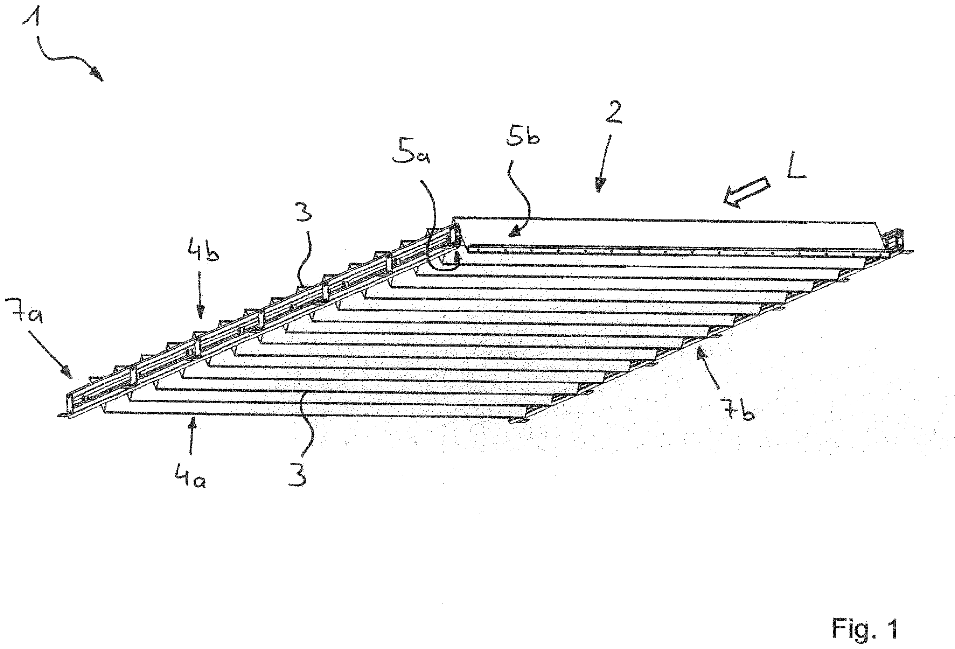

Die in Fig. 1 gewählte perspektivische Darstellung der Faltenabdeckung 1 zeigt diese von schräg unten. Wie zu erkennen, umfasst die Faltenabdeckung 1 eine Abdeckfläche 2, die z. B. aus einer durchgehenden Materialbahn , aber auch aus an den Faltenspitzen miteinander verbundenen Materialstreifen gebildet sein kann. Die Materialbahn weist in einem, insbesondere gleichbleibenden Abstand zueinander angeordnete Faltkanten 3 auf. Entlang dieser Faltkanten 3 ist die unter der abwechselnden Ausbildung von Innenfalten 4a sowie Außenfalten 4b faltbare Abdeckfläche 2 entgegen ihrer Auszugslänge L verkürzbar und unter entsprechender Streckung bis hin zur Glättung ihrer Falten 4a, 4b in Auszugslänge L verlängerbar. Zwischen zwei unmittelbar parallel zueinander verlaufenden Faltkanten 3 erstreckt sich jeweils ein Faltenabschnitt 5a, 5b, wobei zwei dieser Faltenabschnitte 5a, 5b gemeinsam jeweils eine der Falten 4a, 4b bilden. Die Abdeckfläche 2 ist mit hier nicht näher erkennbaren Tragprofilen 6 verbunden, über welche die Abdeckfläche 2 an sich gegenüberliegenden und dabei seitlich der Abdeckfläche 2 verlaufenden Führungsleisten 7a, 7b verschieblich abgestützt ist.

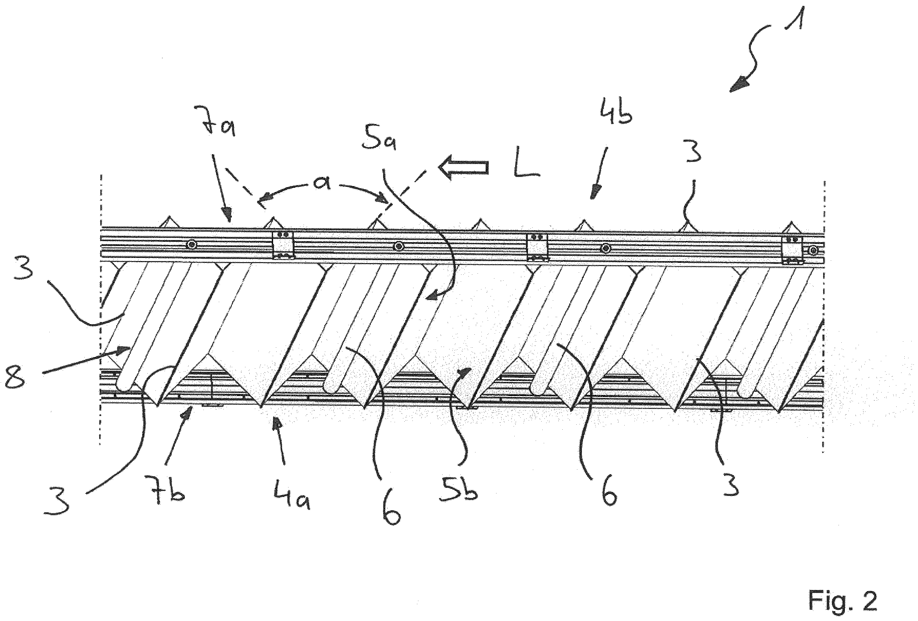

Fig. 2 zeigt einen Abschnitt der Faltenabdeckung 1 aus Fig. 1 in einer Seitenansicht, wobei die hier leicht geneigte Seitenansicht weiterhin einen Blick unter die Abdeckfläche 2 der Faltenabdeckung 1 ermöglicht. In dieser Darstellung sind die bereits erwähnten Tragprofile 6 deutlich erkennbar, welche vorliegend einen im Querschnitt runden Hohlkörper aus einem Faser-Verbundwerkstoff aufweisen. Über eine Veränderung eines jeweils zwischen zwei Faltenabschnitten 5a, 5b einer Falte 4a, 4b eingeschlossenen Winkels a ist die Faltenabdeckung 1 in ihrer Auszugslänge L veränderbar, wobei die theoretisch maximal mögliche Auszugslänge L erreicht ist, wenn der Winkel a zwischen den Faltenabschnitten 5a, 5b genau 180° beträgt.

Weiterhin erkennbar ist die Abdeckfläche 2 nur über einige ihrer Faltenabschnitte 5a, 5b mit den Tragprofilen 6 verbunden, wobei vorliegend nur jede zweite Falte 4a, 4b eine Verbindung mit einem der Tragprofile 6 aufweist. So weisen jeweils zwei Faltenabschnitte 5a, 5b einer Außenfalte 4b und ein sich an diese Außenfalte 4b anschließender Faltenabschnitt 5a einer Innenfalte 4a keine Verbindung zu einem der Tragprofile 6 auf, so dass sich diese quasi ungestützt zwischen benachbarten Tragprofilen 6 erstrecken. Die einen Kontakt mit den Tragprofilen 6 aufweisenden Faltenabschnitte 5b sind jeweils in einem Verbindungsbereich 8 mit einem der Tragprofile 6 verbunden, welcher genau mittig zwischen zwei, den zugehörigen Faltenabschnitt 5b begrenzenden Faltkanten 3 gelegen ist.

Die ungestützte Erstreckung einiger Faltenabschnitte 5a, 5b ist möglich, da das Material der Abdeckfläche 2 aus einem zumindest begrenzt biegesteifen Material gebildet ist.

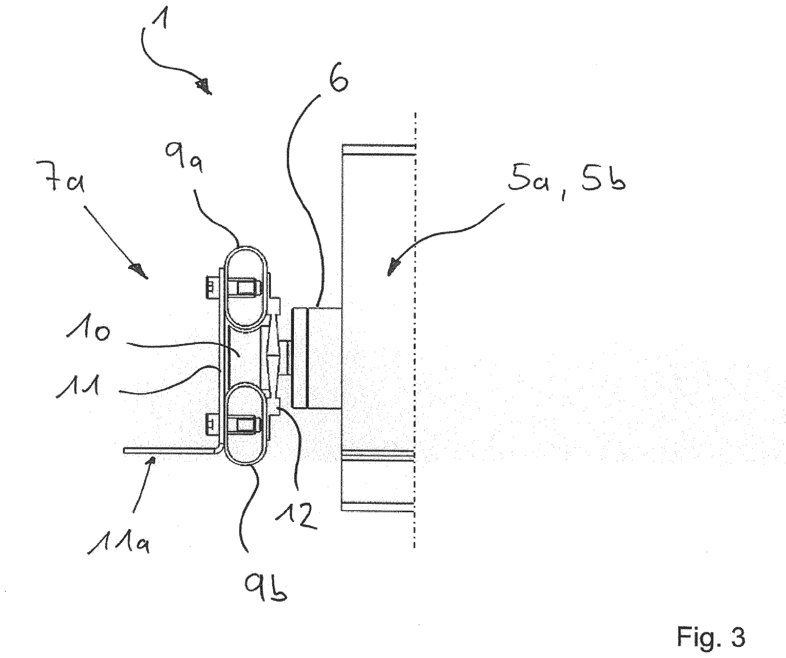

Fig. 3 zeigt ein Detail der Faltenabdeckung 1 aus den Fig. 1 und 2 in einer Seitenansicht. Das Detail zeigt einen Schnitt durch die Führungsleiste 7a, wobei der Aufbau zu der gegenüberliegenden Führungsleiste 7b identisch ist. Damit gelten die Ausführungen zu dieser Führungsleiste 7a für die andere Führungsleiste 7b entsprechend. In diesem Schnitt wird deutlich, dass die Führungsleiste 7a zwei übereinanderliegende Schienen 9a, 9b besitzt. Vorliegend ist das in Fig. 3 erkennbare Tragprofil 6 verschieblich an der Führungsleiste 7a gestützt, wobei ein an deren Ende angeordneter Rollkörper 10 genau zwischen den beiden Schienen 9a, 9b der Führungsleiste 7a gelegen ist. Erkennbar ist der Rollkörper 10 in seinem umfangsseitigen Kontaktbereich zu den beiden Schienen 9a, 9b formangepasst. Die beiden Schienen 9a, 9b der Führungsleiste 7a sind durch eine Halterung 11 in ihrem Abstand zueinander fixiert, wobei ein sich parallel zur Längsrichtung des Tragprofils 6 erstreckender Schenkel 11a der L-förmigen Halterung 11 zur Befestigung der Faltenabdeckung 1 an einer hier nicht näher ersichtlichen Einhausung einer Maschine dient. Ein im Bereich des Rollkörpers 10 angeordnetes Bürstenelement 12 dichtet einen zwischen ihren Schienen 9a, 9b gelegenen Innenbereich der Führungsleiste 7a und die Rollkörper 10 ab, beispielsweise gegenüber einem hier nicht näher erkennbaren Arbeitsraum einer Maschine.

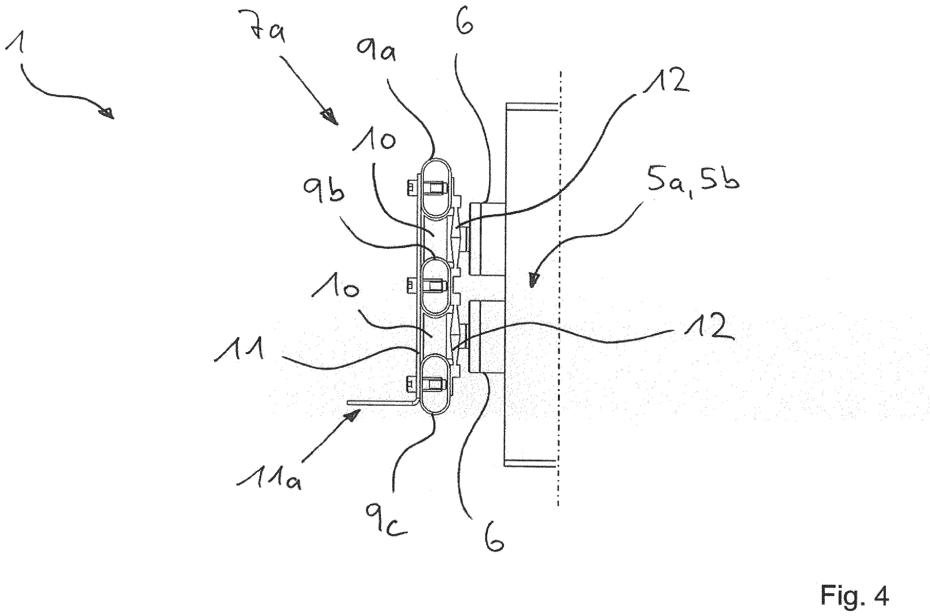

Fig. 4 ist eine Variante zu der bereits aus Fig. 3 hervorgehenden Abstützung der Tragprofile 6 an den Führungsleisten 7a, 7b zu entnehmen. Vorliegend weist die Führungsleiste 7a insgesamt drei übereinanderliegende Schienen 9a - 9c auf. Erkennbar sind die Tragprofile 6 nunmehr abwechselnd in unterschiedlichen Höhenebenen angeordnet. Hierzu sind deren jeweilige Rollkörper 10 entweder zwischen der obersten Schiene 9a und der mittleren Schiene 9b oder aber zwischen der mittleren Schiene 9b und der untersten Schiene 9c angeordnet. Auch hier dichten im Bereich der einzelnen Rollkörper 10 angeordnete Bürstenelemente 12 die beiden jeweils zwischen zwei der Schienen 9a - 9c gelegenen Innenbereiche der Führungsleiste 7a zusammen mit den darin geführten Rollkörpern 10 ab.

### Bezugszeichen:

- 1: Faltenabdeckung
- 2: Abdeckfläche von 1
- 3: Faltkante zwischen 5a und 5b
- 4a: Innenfalte von 2
- 4b: Außenfalte von 2
- 5a: Faltenabschnitt von 4a oder 4b
- 5b: Faltenabschnitt von 4a oder 4b
- 6: Tragprofil von 1
- 7a: Führungsleiste von 1
- 7b: Führungsleiste von 1
- 8: Verbindungsbereich zwischen 5b und 6
- 9a: Schiene von 7a oder 7b
- 9b: Schiene von 7a oder 7b
- 9c: Schiene von 7a oder 7b
- 10: Rollkörper oder Gleitkörper an 6
- 11: Halterung von 1
- 11a: Schenkel von 11
- 12: Bürstenelement

- a: Winkel zwischen 5a und 5b
- L: Auszugslänge von 2

## Patentansprüche

1. Faltenabdeckung (1) für einen Dachbereich einer Maschine, umfassend eine Abdeckfläche (2) aus einer Materialbahn, welche zur sich abwechselnden Ausbildung von Innenfalten (4a) sowie Außenfalten (4b) vorgesehene Faltkanten (3) aufweist, zwischen denen sich jeweils ein Faltenabschnitt (5a, 5b) erstreckt, wobei die Abdeckfläche (2) mit Tragprofilen (6) verbunden ist, welche jeweils endseitig an sich gegenüberliegenden Führungsleisten (7a, 7b) verschieblich abgestützt sind, dass die Abdeckfläche (2) über die Veränderung eines jeweils zwischen zwei Faltenabschnitten (5a, 5b) eingeschlossenen Winkels (a) in ihrer Auszugslänge (L) veränderbar ist,
**dadurch gekennzeichnet,**
**dass** die Abdeckfläche (2) über wenigstens einige ihrer Faltenabschnitte (5a, 5b) mit den Tragprofilen (6) verbunden ist, wobei ein Verbindungsbereich (8) zwischen einem Tragprofil (6) und einem durch zwei Faltkanten (3) begrenzten Faltenabschnitt (5a, 5b) jeweils zwischen diesen Faltkanten (3) gelegen ist.

2. Faltenabdeckung (1) nach Anspruch 1,
**dadurch gekennzeichnet,**
**dass** der Verbindungsbereich (8) zwischen einem Tragprofil (6) und einem Faltenabschnitt (5b) im mittleren Drittel des Faltenabschnitts, insbesondere mittig, zwischen den ihn begrenzenden Faltkanten (3) gelegen ist.

3. Faltenabdeckung (1) nach Anspruch 1 oder 2,
**dadurch gekennzeichnet,**
**dass** die Abdeckfläche (2) aus einem zumindest begrenzt biegesteifen Material gebildet ist, wodurch wenigstens eine Innenfalte (4a) und/oder Außenfalte (4b) zwischen zwei mit den Faltenabschnitten (5a, 5b) benachbarter Innenfalten (4a) und/oder Außenfalten (4b) verbundenen Tragprofilen (6) ungestützt tragfähig ist.

4. Faltenabdeckung (1) nach einem der vorhergehenden Ansprüche,
**dadurch gekennzeichnet,**
**dass** die Abdeckfläche (2) aus einer durchgehenden Materialbahn oder aus an den Faltkanten (3) miteinander verbundenen Materialstreifen gebildet ist.

5. Faltenabdeckung (1) nach einem der vorhergehenden Ansprüche,
**dadurch gekennzeichnet,**
**dass** die Führungsleisten (7a, 7a) jeweils wenigstens zwei übereinanderliegende Schienen (9a - 9c) besitzen, in und/ oder an denen die aufeinanderfolgenden Tragprofile (6) abwechselnd verschieblich abgestützt sind.

6. Faltenabdeckung (1) nach Anspruch 5,
**dadurch gekennzeichnet,**
**dass** wenigstens einige der Tragprofile (6) zwischen zwei Schienen (9a - 9c) verschieblich geführt sind.

7. Faltenabdeckung (1) nach einem der vorhergehenden Ansprüche,
**dadurch gekennzeichnet,**
**dass** die Tragprofile (6) aus einem Faser-Verbundwerkstoff gebildet sind oder einen solchen aufweisen.

8. Faltenabdeckung (1) nach einem der vorhergehenden Ansprüche,
**dadurch gekennzeichnet,**
**dass** an wenigstens einem Faltenabschnitt (5a, 5b), bevorzugt an allen Faltenabschnitten (5a, 5b), einer Innenfalte (4a) und/oder einer Außenfalte (4b) ein Abdeckblech angeordnet ist.

9. Faltenabdeckung (1) nach einem der vorhergehenden Ansprüche,
**dadurch gekennzeichnet,**
**dass** die Tragprofile (6) an deren Enden angeordnete Rollkörper (10) und/oder Gleitkörper besitzen.

10. Faltenabdeckung (1) nach Anspruch 9,
**dadurch gekennzeichnet,**
**dass** die Rollkörper (10) und/oder Gleitkörper zumindest an die Führungsleisten (7a, 7b) und/oder deren Schienen (9a - 9c) formangepasst sind.

11. Faltenabdeckung (1) nach Anspruch 10,
**gekennzeichnet durch**
im Bereich der Rollkörper (10) und/oder Gleitkörper angeordnete Bürstenelemente (12), über welche ein Bereich der Führungsleisten (7a, 7b) und/oder deren Schienen (9a - 9c) zumindest teilweise abgedichtet ist, insbesondere gegenüber einer Verschmutzung.

12. Faltenabdeckung (1) nach einem der vorhergehenden Ansprüche,
**dadurch gekennzeichnet,**
**dass** die Tragprofile (6) aus wenigstens einem, insbesondere runden oder rechteckigen, Hohlkörper gebildet sind oder einen solchen aufweisen.

13. Faltenabdeckung (1) nach einem der vorhergehenden Ansprüche,
**gekennzeichnet durch**
wenigstens ein, insbesondere im Bereich einer Führungsleiste (7a, 7b) angeordnetes, Bürstenelement (12) .

14. Faltenabdeckung (1) nach einem der vorhergehenden Ansprüche,
**dadurch gekennzeichnet,**
**dass** der Verbindungsbereich (8) zwischen einem Tragprofil (6) und einem Faltenabschnitt (5a, 5b) wenigstens eine an diesem Faltenabschnitt (5a, 5b) angeordnete und/oder durch diesen gebildete Lasche aufweist, durch oder in welche das zugehörige Tragprofil (6) zumindest abschnittsweise geführt ist.

15. Faltenabdeckung (1) nach Anspruch 14,
**dadurch gekennzeichnet,**
**dass** die wenigstens eine Lasche durch mindestens eine der nachfolgend aufgezählten Verbindungsarten mit dem Faltenabschnitt (5a, 5b) verbunden ist:
- Nähen;
- Ultraschallverschweißen;
- Kleben.

16. Faltenabdeckung (1) nach einem der vorhergehenden Ansprüche,
**dadurch gekennzeichnet,**
**dass** die Abdeckfläche (2) jeweils im Bereich der Faltkanten (3) zumindest partiell geschlitzt ist.

17. Faltenabdeckung (1) nach einem der vorhergehenden Ansprüche,
**gekennzeichnet durch**
wenigstens ein, insbesondere im Bereich einer Falte (4a, 4b) angeordnetes, Federelement und/oder Dämpferelement.

18. Faltenabdeckung (1) nach einem der vorhergehenden Ansprüche,
**dadurch gekennzeichnet,**
**dass** die Abdeckfläche (2) zumindest bereichsweise lichtdurchlässig ausgebildet ist.

## Claims

1. Folding cover (1) for a roof area of a machine, comprising a cover surface (2) comprising a material panel which has folding edges (3) provided for forming internal folds (4a) and external folds (4b) in alternation each with a fold section (5a,5b) inbetween, wherein the cover surface (2) is connected to support profiles (6) which are supported in each case at the ends in displaceable manner on opposing guide strips (7a, 7b), whereby the extended length (L) of the cover surface (20 can be changed by changing an angle (a) included in each case between two fold sections (5a, 5b),
**characterised in that**
the cover surface (2) is connected to the support profiles (6) via at least some of its fold sections (5a, 5b), wherein a connecting region (8) between a support profile (6) and a fold section (5a, 5b), delimited by two folding edges (3), is situated in each case between these folding edges (3).

2. Folding cover (1) according to claim 1,
**characterised in that**
the connecting region (8) between a support profile (6) and a fold section (5b) is situated in the middle third of the fold section, in particularly centrally, between the folding edges (3) which delimit it.

3. Folding cover (1) according to claim 1 or 2
**characterised in that**
the cover surface (2) is formed from a material which is bending resistant to at least a restricted extent, whereby at least one internal fold (4a) and/or one external fold (4b) is stable unsupported between two support profiles (6) which are connected to the fold sections (5a, 5b) of adjacent internal folds (4a) and/or external folds (4b).

4. Folding cover (1) according to one of the preceding claims
**characterised in that**
the cover surface (2) is formed from a continuous material panel or from material strips which are connected to one another at the folding edges (3).

5. Folding cover (1) according to one of the preceding claims
**characterised in that**
the guide strips (7a, 7a) each have at least two superposed rails (9a-9c) in and/or on which the successive support profiles (6) are supported in displaceable manner in alternation.

6. Folding cover (1) according to claim 5
**characterised in that**
at least some of the support profiles (6) are guided in displaceable manner between two rails (9a-9c).

7. Folding cover (1) according to one of the preceding claims
**characterised in that**
the support profiles (6) are made from a fibre composite material or comprise one such material.

8. Folding cover (1) according to one of the preceding claims
**characterised in that**
a cover plate is arranged on at least one fold section (5a, 5b), preferably on all fold sections (5a, 5b), of an internal fold (4a) and/or an external fold (4b).

9. Folding cover (1) according to one of the preceding claims
**characterised in that**
the support profiles (6) have roller bodies (10) and/or sliding bodies arranged at their ends.

10. Folding cover (1) according to claim 9
**characterised in that**
the roller bodies (10) and/or sliding bodies are adapted in shape to at least the guide strips (7a, 7b) and/or their rails (9a-9c).

11. Folding cover (1) according to claim 10 **characterised by** brush elements (12) arranged in the region of the roller bodies (10) and/or sliding bodies and via which one region of the guide strips (7a, 7b) and/or their rails (9a- 9c) is sealed at least in part, in particular against dirt.

12. Folding cover (1) according to one of the preceding claims
**characterised in that**
the support profiles (6) are formed from at least one, in particular round or rectangular, hollow body, or have one such body.

13. Folding cover (1) according to one of the preceding claims
**characterised by** at least one brush element (12) arranged in particular in the region of a guide strip (7a, 7b).

14. Folding cover (1) according to one of the preceding claims
**characterised in that**
the connecting region (8) between a support profile (6) and a fold section (5a, 5b) has at least one tab arranged on this fold section (5a, 5b) and/or formed by this fold section, and through which or in which the associated support profile (6) is guided at least section wise.

15. Folding cover (1) according to claim 14
**characterised in that**
the at least one tab is connected to the fold section (5a, 5b) by at least one of the following types of connection:
- stitching;
- ultrasound welding;
- adhesive bonding.

16. Folding cover (1) according to one of the preceding claims
**characterised in that**
the cover surface (2) is slit at least partially in the region of the folding edges (3).

17. Folding cover (1) according to one of the preceding claims
**characterised by** at least one spring element and/or damping element arranged in particular in the region of a fold (4a, 4b).

18. Folding cover (1) according to one of the preceding claims
**characterised in that**
the cover surface (2) is formed light-permeable in at least some areas.

## Revendications

1. Recouvrement pliant (1) pour une zone de toit d'une machine, comportant une surface de recouvrement (2) constituée d'une bande de matériau, qui présente des bords de pliage (3) prévus pour la formation alternée de plis intérieurs (4a) et de plis extérieurs (4b), entre lesquels s'étend respectivement une section de pliage (5a, 5b), dans lequel la surface de recouvrement (2) est reliée à des profilés porteurs (6) , qui s'appuient de manière coulissante, à chaque extrémité, sur des barres de guidage (7a, 7b) se faisant face, que la longueur d'extension (L) de la surface de recouvrement (2) peut être modifiée par la modification d'un angle compris chacun entre deux sections respectives des plis (5a, 5b),
**caractérisée en ce**
**que** la surface de recouvrement (2) est reliée aux profilés porteurs (6) par au moins certaines de ses sections de pliage (5a, 5b), dans lequel une zone de liaison (8) entre un profilé porteur (6) et une section de pliage (5a, 5b) délimitée par deux bords de pliage (3) est respectivement située entre ces bords de pliage (3) .

2. Recouvrement pliant (1) selon la revendication 1,
**caractérisée en ce**
**que** la zone de liaison (8) entre un profilé porteur (6) et une section de pliage (5a, 5b) est située dans le tiers central de la section de pliage (5a, 5b), en particulier au milieu, entre les bords de pliage (3) qui le délimitent.

3. Recouvrement pliant (1) selon la revendication 1 ou 2,
**caractérisée en ce**
**que** la surface de recouvrement (2) est formé d'un matériau présentant au moins une résistance limitée à la flexion, ce qui fait qu'au moins un pli intérieur (4a) et/ou un pli extérieur (4b) est stable sans support entre deux profilés porteurs (6) reliés aux sections de pliage (5a, 5b) des plis intérieurs (4a) et/ou des plis extérieurs (4b) adjacents.

4. Recouvrement pliant (1) selon l'une quelconque des revendications précédentes,
**caractérisée en ce**
**que** la surface de recouvrement (2) est formée d'une bande de matériau continue ou de rubans de matériau reliés entre eux au niveau des bords de pliage (3).

5. Recouvrement pliant (1) selon l'une quelconque des revendications précédentes,
**caractérisée en ce**
**que** les barres de guidage (7a, 7a) possèdent chacune au moins deux rails superposés (9a - 9c) dans et/ou sur lesquels les profilés porteurs (6) successifs sont soutenus alternativement de manière coulissante.

6. Recouvrement pliant (1) selon la revendication 5,
**caractérisée en ce**
**qu'**au moins certains de profilés porteurs (6) sont guidés de manière coulissante entre deux rails (9a - 9c) .

7. Recouvrement pliant (1) selon l'une quelconque des revendications précédentes,
**caractérisée en ce**
**que** les profilés porteurs (6) sont formés d'un matériau composite renforcé par des fibres ou présentent un tel matériau.

8. Recouvrement pliant (1) selon l'une quelconque des revendications précédentes,
**caractérisée en ce**
**que** sur au moins une section de pliage (5a, 5b), de préférence, sur toutes les sections de pliage (5a, 5b) d'un pli intérieur (4a) et/ou d'un pli extérieur (4b), une plaque de recouvrement est agencée.

9. Recouvrement pliant (1) selon l'une quelconque des revendications précédentes,
**caractérisée en ce**
**que** les profilés porteurs (6) comportent des éléments roulants (10) et/ ou des éléments coulissants placés à leurs extrémités.

10. Recouvrement pliant (1) selon la revendication 9,
**caractérisée en ce**
**que** les éléments roulants (10) et/ou les éléments coulissants sont adaptés à la forme au moins des barres de guidage (7a, 7b) et/ou à leurs rails (9a à 9c).

11. Recouvrement pliant (1) selon la revendication 10,
**caractérisée par**
des éléments de brosse (12) agencés dans la zone des éléments roulants (10) et/ou des éléments coulissants, par l'intermédiaire desquels une zone des barres de guidage (7a, 7b) et/ou leurs rails (9a à 9c) est au moins partiellement rendue étanche, en particulier vis-à-vis d'un encrassement.

12. Recouvrement pliant (1) selon l'une quelconque des revendications précédentes,
**caractérisée en ce**
**que** les profilés porteurs (6) sont formés d'au moins un corps creux, en particulier rond ou rectangulaire, ou présentent un tel corps creux.

13. Recouvrement pliant (1) selon l'une quelconque des revendications précédentes,
**caractérisée par**
au moins un élément de brosse (12), agencé en particulier dans la zone d'une barre de guidage (7a, 7b) .

14. Recouvrement pliant (1) selon l'une quelconque des revendications précédentes,
**caractérisée en ce**
**que** la zone de liaison (8), entre un profilé porteur (6) et un section de pliage (5a, 5b), comporte au moins une languette, agencée sur cette section de pliage (5a, 5b) et/ou formée par celle-ci, à travers ou dans laquelle le profilé porteur (6) correspondant est guidé au moins par sections.

15. Recouvrement pliant (1) selon la revendication 14,
**caractérisée en ce**
**que** l'au moins une languette est reliée à la section de pliage (5a, 5b) par au moins l'un des modes de liaison énumérés ci-après :
- couture;
- soudage par ultrasons;
- collage.

16. Recouvrement pliant (1) selon l'une quelconque des revendications précédentes,
**caractérisée en ce**
**que** la surface de recouvrement (2) est fendue au moins partiellement dans la zone des bords de pliage (3).

17. Recouvrement pliant (1) selon l'une quelconque des revendications précédentes,
**caractérisée par**
au moins un élément de ressort et/ou un élément d'amortisseur, en particulier dans la zone d'un pli (4a, 4b).

18. Recouvrement pliant (1) selon l'une quelconque des revendications précédentes,
**caractérisée en ce**
**que** la surface de recouvrement (2) est réalisée de manière à laisser passer la lumière au moins localement.
